# EUROPEAN PATENT SPECIFICATION

(11) **EP 4 542 233 B1**
(45) Date of publication and mention of the grant of the patent: **02.12.2026**
(21) Application number: 23823506.3
(22) Date of filing: 12.04.2023
(51) Int. Cl.: G01N 35/10

(54) **AUTOMATED ANALYSIS DEVICE**
AUTOMATISIERTE ANALYSEVORRICHTUNG
DISPOSITIF D'ANALYSE AUTOMATISÉ

(30) Priority: 16.06.2022 JP 2022097049
(43) Date of publication of application: 23.04.2025
(73) Proprietor: HITACHI HIGH-TECH CORPORATION, Tokyo 105-6409 (JP)
(72) Inventor: CHENG, Bohao, Tokyo 100-8280 (JP); NODA, Kazuhiro, Tokyo 100-8280 (JP); HAMASAKI, Koshin, Tokyo 105-6409 (JP); SATO, Yuri, Tokyo 105-6409 (JP); SHIMADA, Masafumi, Tokyo 105-6409 (JP)
(74) Representative: Mewburn Ellis LLP
(86) International application number: PCT/JP2023/014913
(87) International publication number: WO 2023/243203

(56) References cited:
- WO-A1-2015/071957
- JP-A- 2002 162 401
- JP-A- 2007 093 220
- JP-A- 2011 102 744
- JP-A- H05 256 858
- JP-A- H05 288 753
- JP-A- H06 341 999
- JP-B2- 3 866 754
- JP-U- S60 176 158
- US-B2- 10 895 582

## Description

### Technical Field

The present invention relates to an automated analysis device.

### Background Art

In recent years, automated analysis devices that perform fully automatic or semi-automatic biochemical analysis, immune analysis, and gene analysis have been widely used in fields such as clinical examinations. In an automated analysis device, generally, a reagent and a specimen to be examined are sucked from a container by a pipetting mechanism and discharged to a reaction container on an incubator. The components contained in the mixed liquid of the reagent and the specimen in the reaction container are detected by a detection unit.

As a technique for improving analysis accuracy, PTL 1 discloses an automated analysis device that increases or decreases an extra amount at a leading end and an extra amount at a rear end according to the total amount of the specimen to be pipetted.

### Citation List

### Patent Literature

PTL 1: JP 2009-243969 A
US 10 895 582 B2 discloses a sample preparing apparatus, system and method, and a particle analyzer.

### Summary of Invention

### Technical Problem

Depending on an analysis item, the pipetting mechanism continuously sucks a plurality of types of liquids (a plurality of reagents or a reagent and a specimens) in a single pipetting and continuously discharges the sucked liquid to a reaction container to reduce the number of washing times and shorten the time for pipetting. In such a case, the liquid sucked first is stored deeper in the pipetting mechanism and is therefore tends to be left in the pipetting mechanism after discharging of the liquid, and for the liquid sucked later, the residual liquid is relatively small.

An object of the present invention is to provide an automated analysis device that can supply a liquid to a reaction container by a target pipetting amount even when a pipetting mechanism continuously sucks and discharges a plurality of types of liquids, and therefore has high analysis accuracy.

### Solution to Problem

To solve the above-descried problem, an automated analysis device according to the present invention includes a pipetting mechanism that sucks a liquid from a specimen container or a reagent container and discharges the liquid to a reaction container, and a control unit that controls an operation of the pipetting mechanism to pipette a target pipetting amount of a liquid, wherein in pipetting, the pipetting mechanism sucks an extra suction amount of a liquid in addition to the target pipetting amount of the liquid, and when the pipetting mechanism is to continuously suck a plurality of types of liquids and continuously discharge the plurality of types of liquids that have been sucked, the control unit varies an extra suction amount to be sucked by the pipetting mechanism according to an order of sucking liquids.

### Advantageous Effects of Invention

According to the present invention, an automated analysis device that can supply a liquid to a reaction container by a target pipetting amount even when a pipetting mechanism continuously sucks and discharges a plurality of types of liquids, and therefore has high analysis accuracy can be provided. Details on problems, configurations, and effects will be clarified by the following description of embodiments.

### Brief Description of Drawings

[FIG. 1] FIG. 1 is a schematic configuration diagram of an automated analysis device according to a first embodiment.
[FIG. 2] FIG. 2 is a schematic configuration diagram of a pipetting mechanism.
[FIG. 3] FIG. 3 is a diagram illustrating the internal state of a probe and a tip when three types of liquids are pipetted together.
[FIG. 4] FIG. 4 is a flowchart illustrating an operation procedure of the pipetting mechanism for pipetting three types of liquids together.
[FIG. 5] FIG. 5 is a diagram illustrating the internal state of a probe and a tip when two types of liquids are pipetted together.
[FIG. 6] FIG. 6 is a flowchart illustrating an operation procedure of the pipetting mechanism for pipetting two types of liquids together.
[FIG. 7] FIG. 7 is a diagram illustrating the internal state of a probe and a tip when a single type of liquid is pipetted.
[FIG. 8] FIG. 8 is a flowchart illustrating an operation procedure of the pipetting mechanism for pipetting a single type of liquid.
[FIG. 9] FIG. 9 is a table for setting a pipetting pattern for each analysis item in the first embodiment.
[FIG. 10] FIG. 10 is a block diagram illustrating an information flow in which a control unit controls the pipetting mechanism for an analysis item.
[FIG. 11] FIG. 11 is a table for setting a pipetting pattern for each analysis item in a second embodiment.
[FIG. 12] FIG. 12 is a table for setting a pipetting pattern for each analysis item in a third embodiment.

### Description of Embodiments

Hereinafter, an embodiment of the present invention will be described with reference to the drawings.

### (First embodiment)

An automated analysis device according to a first embodiment sucks a reagent and a specimen into a tip attached to the leading end of a probe of a pipetting mechanism and discharges the reagent and the specimen to a reaction container. The present embodiment will be exemplary described for a case where the pipetting mechanism continuously sucks up to three types of liquids (a reagent or a specimen), and continuously discharges the liquids to the reaction container.

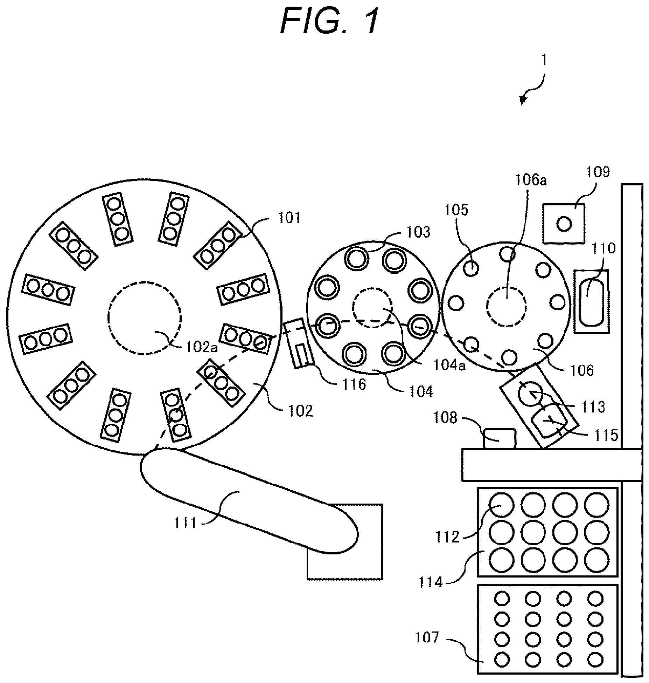

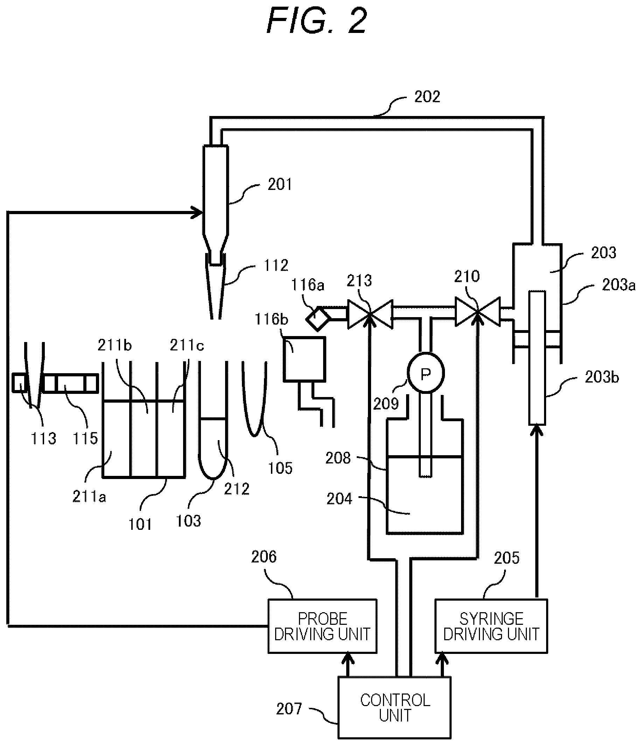

FIG. 1 is a schematic configuration diagram of the automated analysis device according to the first embodiment. An automated analysis device 1 mainly includes a reagent disk 102, a specimen disk 104, an incubator 106, a detection unit 109, a pipetting mechanism 111, a washing mechanism 116, and a control unit 207 (see FIG. 2).

A reagent bottle 101 (reagent container) containing a reagent to be subjected to analysis is held by the reagent disk 102, and a specimen container 103 containing a specimen is held by the specimen disk 104. The reaction container 105 for reacting the specimen with the reagent is held by the incubator 106 whose temperature is controlled to be constant.

The reaction container 105 supported by the reaction container tray 107 and loaded in the automated analysis device is conveyed onto the incubator 106 via a gripper 108. The components of a solution in which a reaction has proceeded in the reaction container 105 are detected by the detection unit 109. After detection, the used reaction container 105 is discarded into a reaction container discard port 110 via the gripper 108.

The reagent disk 102, the specimen disk 104, and the incubator 106 are integrally provided with, respectively, a reagent disk drive mechanism 102a, a specimen disk drive mechanism 104a, and an incubator drive mechanism 106a that rotationally drive, respectively, the reagent disk 102, the specimen disk 104, and the incubator 106. The reagent disk 102, the specimen disk 104, and the incubator 106 are each moved by the drive mechanism to be in a rotational position to allow the pipetting mechanism 111 to approach the liquids. The term "approach" as used herein means not only to come close to a liquid but also to suck the liquid. The same applies to the following.

The pipetting mechanism 111 uses disposable tips 112 to prevent carrying over the components of a specimen or a reagent to the subsequent analysis during pipetting. The pipetting mechanism 111 sucks the specimen and the reagent to be used using the tip 112 placed in the tip buffer 113. The tip 112 is supported by the tip tray 114 and mounted in the automated analysis device, and is conveyed from the tip tray 114 onto the tip buffer 113 via the gripper 108. After pipetting, the used tip 112 is discarded into a tip discard port 115. The washing mechanism 116 washes the pipetting mechanism 111 to prevent carrying over the components during pipetting of different liquids.

FIG. 2 is a schematic configuration diagram of the pipetting mechanism. The tip 112 is attached to the leading end of a probe 201 constituting the pipetting mechanism 111. The probe 201 is coupled to a syringe 203 for sucking and discharging a liquid via a tube 202. The syringe 203 can suck and discharge a liquid by a plunger 203b moving with respect to a cylinder 203a. The flow passage in the pipetting mechanism 111 is filled with washing water 204, and the washing water 204 has functions of improving the efficiency of pressure propagation and washing off residues.

The syringe 203 performs sucking and discharging operations by a syringe driving unit 205, and the probe 201 is raised, lowered, and rotated by a probe driving unit 206 (moving mechanism). The control unit 207 controls the amounts and timings of the operations. The washing water 204 in a washing water tank 208 is fed into the flow passage via a pump 209. To deliver the washing water 204 to the probe 201, the control unit 207 opens and closes the electromagnetic valve 210 to start and stop the water delivery.

The tip 112 is attached to the leading end of the probe 201 at the tip buffer 113, approaches three types of reagents 211a, 211b, and 211c contained in the reagent bottle 101, a specimen 212 contained in the specimen container 103, the reaction container 105, and the washing mechanism 116, and is then discarded into the tip discard port 115. The washing mechanism 116 includes a washing nozzle 116a and a drain cup 116b, and the washing nozzle 116a can wash the outer wall of the tip 112. By discharging the washing water from the probe 201, from which the tip has been removed, to the drain cup 116b, the inner wall of the probe 201 can be washed. The control unit 207 opens and closes the electromagnetic valve 213 to start and stop the feeding of the washing water to the washing nozzle 116a.

### <Example of pipetting three types of liquids together>

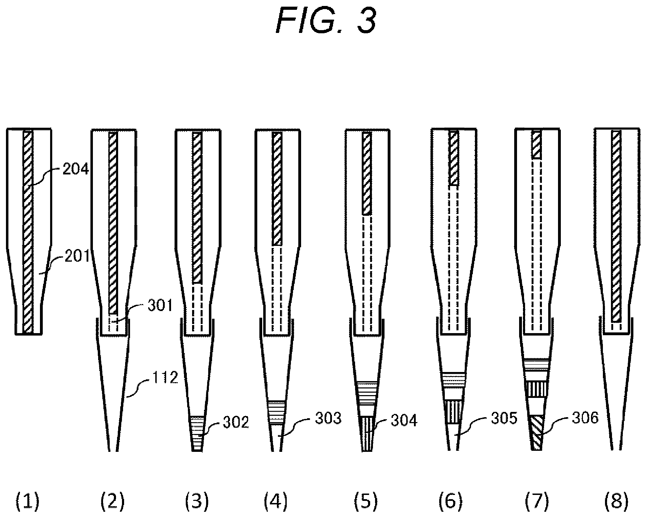

FIG. 3 is a diagram illustrating the internal state of the probe and the tip where three types of liquids are continuously sucked and discharged together to the reaction container. The inside of the probe 201 is initially filled with the washing water 204 (FIG. 3 (1)). The control unit 207 drives the syringe 203 to suck a segmented air 301 into the probe 201, and then causes the probe 201 to approach the tip buffer 113 to attach the tip 112 (FIG. 3 (2)). The segmented air 301 previously sucked into the probe 201 prevents dripping of the washing water 204 when the tip 112 is being attached.

Next, the control unit 207 drives the probe 201 to dip the tip 112 into a liquid 302. The liquid 302 is any one of the reagents 211a, 211b, and 211c and the specimen 212. During the dip, the control unit 207 drives the syringe 203 to suck the liquid 302 into the tip 112 (FIG. 3 (3)). During the suction, the liquid 302 adheres to the outer wall of the tip 112. Thus, the control unit 207 causes the probe 201 to approach the washing mechanism 116 and discharges the washing water 204 from the washing nozzle 116a to the outer wall of the tip 112, thereby washing off the liquid 302 adhering to the outer wall of the tip 112. Before or after the wash, the control unit 207 drives the syringe 203 to suck a segmented air 303 into the probe 201 to prevent dripping of the liquid 302 (FIG. 3 (4)).

Then, the control unit 207 drives the probe 201 to dip the tip 112 into a liquid 304. The liquid 304 is any one of the reagents 211a, 211b, and 211c and the specimen 212. During the dip, the control unit 207 drives the syringe 203 to suck the liquid 304 into the tip 112 (FIG. 3 (5)). During the suction, the liquid 304 adheres to the outer wall of the tip 112. Thus, the control unit 207 causes the probe 201 to approach the washing mechanism 116 and discharges the washing water 204 from the washing nozzle 116a to the outer wall of the tip 112, thereby washing off the liquid 304 adhering to the outer wall of the tip 112. Before or after the wash, the control unit 207 drives the syringe 203 to suck a segmented air 305 into the probe 201 to prevent dripping of the liquid 304 (FIG. 3 (6)).

Finally, the control unit 207 drives the probe 201 to dip the tip 112 into a liquid 306. The liquid 306 is any one of the reagents 211a, 211b, and 211c and the specimen 212. During the dip, the control unit 207 drives the syringe 203 to suck the liquid 306 into the tip 112 (FIG. 3 (7)). Now all the liquids to be pipetted have been sucked by the processes, the control unit 207 drives the probe 201 to approach the reaction container 105 and discharges all the liquids (FIG. 3 (8)). As a result, the three types of liquids, which are the liquid 302, the liquid 304, and the liquid 306, can be pipetted with the single tip 112.

After discharging the three types of liquids into the reaction container 105, the control unit 207 may cause the liquid in the reaction container 105 to be sucked into and discharged from the tip 112 to stir the liquid.

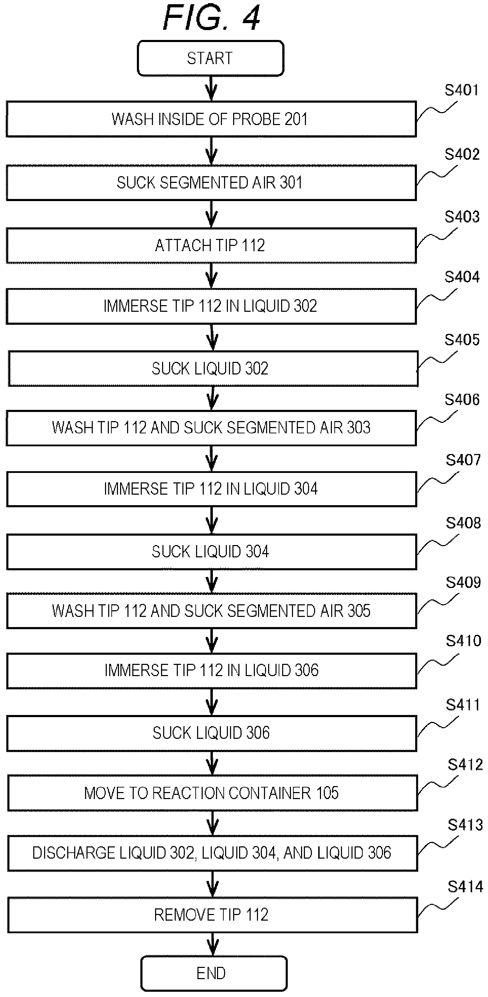

FIG. 4 is a flowchart illustrating an operation procedure of the pipetting mechanism for pipetting three types of liquids together. First, the washing water 204 is supplied into the probe 201 to wash the inside of the probe 201 (step S401). Then, the segmented air 301 is sucked into the probe 201 (step S402), and the tip 112 is attached to the leading end of the probe 201 (step S403).

Next, the pipetting mechanism 111 approaches the liquid 302 in the following procedure. The probe 201 is driven to dip the tip 112 into the liquid 302 (step S404), and the liquid 302 is sucked into the tip 112 (step S405). Then, the pipetting mechanism 111 approaches the washing mechanism 116 to wash the outer wall of the tip 112, and washing of the tip 112 and sucking of the segmented air 303 are performed (step S406).

Next, the pipetting mechanism 111 approaches the liquid 304 in the following procedure. The probe 201 is driven to dip the tip 112 into the liquid 304 (step S407), and the liquid 304 is sucked into the tip 112 (step S408). Then, the pipetting mechanism 111 approaches the washing mechanism 116 to wash the outer wall of the tip 112, and washing of the tip 112 and sucking of the segmented air 305 are performed (step S409).

Then, the pipetting mechanism 111 approaches the liquid 306 in the following procedure. The probe 201 is driven to dip the tip 112 into the liquid 306 (step S410), and the liquid 306 is sucked into the tip 112 (step S411).

Finally, the pipetting mechanism 111 approaches the incubator 106 and discharges the sucked liquids. That is, the probe 201 moves to the reaction container 105 (step S412), and the liquid 302, the liquid 304, and the liquid 306 are discharged into the reaction container 105 (step S413). Then, the probe 201 moves to the tip discard port 115, and the tip 112 is removed (step S414). Immediately after discharging the liquid to the reaction container 105 in step S413, the pipetting mechanism 111 may cause the liquid in the reaction container 105 to be sucked into and discharged from the tip 112 to stir the liquid.

In the example illustrated in FIGS. 3 and 4, the liquids sucked first, second, and third are respectively the liquid 302, the liquid 304, and the liquid 306. The liquid 302 which is the first in the suction order reaches the upper part of the tip 112 in FIG. 3. The liquid 306 which is the third in the suction order reaches only the lower part of the tip 112. The liquid 304 which is the second in the suction order reaches an intermediate height between the liquid 302 and the liquid 306.

In step 413 in FIG. 4 in which the liquid is discharged to the reaction container 105, a residual liquid resulting from a liquid film may remain in the tip 112. The residual liquid resulting from the liquid film is larger for a longer moving distance of the liquid in the tip 112. Thus, the liquid 302 that has reached the upper part of the tip 112 leaves the largest amount of residual liquid. The liquid 306 that has reached only the lower part of the tip 112 leaves the smallest amount of residual liquid. The liquid 304 leaves a residual liquid of which amount is an intermediate between those of the liquid 302 and the liquid 306.

To accurately discharge each of the liquid 302, the liquid 304, and the liquid 306 by the target pipetting amount thereof, it is necessary to suck the liquid 302, the liquid 304, and the liquid 306 each by an amount larger by an assumed residual liquid amount, considering the residual liquid left in the tip 112 in the discharging process. Specifically, the control unit 207 sets in advance not only the target pipetting amount but also the extra amount to be sucked (extra suction amount). Then, in step S405, step S408, and step S411 in FIG. 4, the control unit 207 causes the pipetting mechanism 111 to suck the liquids by the total amount of the target pipetting amounts and the extra suction amounts. The control unit 207 varies the extra suction amounts according to the suction order. Desirably, the extra suction amount of the liquid 302 sucked first is set the largest, the extra suction amount of the liquid 306 sucked last is set the smallest, and the extra suction amount of the liquid 304 is set to an intermediate amount between those of the liquid 302 and the liquid 306.

The thickness of the liquid film also depends on the physical properties of the liquid such as viscosity and surface tension. That is, since the residual liquid amount varies depending on the physical properties of the liquid, it is desirable to set the extra suction amount according to the physical properties of the liquid if known before suction.

### <Example of pipetting two types of liquids together>

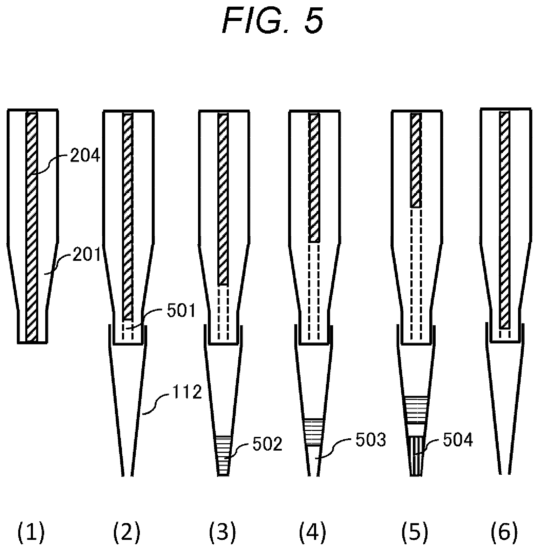

FIG. 5 is a diagram illustrating the internal state of the probe and the tip where two types of liquids are continuously sucked and discharged together to the reaction container. The inside of the probe 201 is initially filled with the washing water 204 (FIG. 5 (1)). The control unit 207 drives the syringe 203 to suck a segmented air 501 into the probe 201, and then causes the probe 201 to approach the tip buffer 113 to attach the tip 112 (FIG. 5 (2)).

Next, the control unit 207 drives the probe 201 to dip the tip 112 into a liquid 502. The liquid 502 is any one of the reagents 211a, 211b, and 211c and the specimen 212. During the dip, the control unit 207 drives the syringe 203 to suck the liquid 502 into the tip 112 (FIG. 5 (3)). During the suction, the liquid 502 adheres to the outer wall of the tip 112. Thus, the control unit 207 causes the probe 201 to approach the washing mechanism 116 and discharges the washing water 204 from the washing nozzle 116a to the outer wall of the tip 112, thereby washing off the liquid 502 adhering to the outer wall of the tip 112. Before or after the wash, the control unit 207 drives the syringe 203 to suck a segmented air 503 into the probe 201 to prevent dripping of the liquid 502 (FIG. 5 (4)).

Finally, the control unit 207 drives the probe 201 to dip the tip 112 into a liquid 504. The liquid 504 is any one of the reagents 211a, 211b, and 211c and the specimen 212. During the dip, the control unit 207 drives the syringe 203 to suck the liquid 504 into the tip 112 (FIG. 5 (5)). Now all the liquids to be pipetted have been sucked by the processes, the control unit 207 drives the probe 201 to approach the reaction container 105 and discharges all the liquids (FIG. 5 (6)). As a result, the two types of liquids, which are the liquid 502 and the liquid 504, can be pipetted with the single tip 112. After discharging the two types of liquids to the reaction container 105, the control unit 207 may cause the liquid in the reaction container 105 to be sucked into and discharged from the tip 112 to stir the liquid.

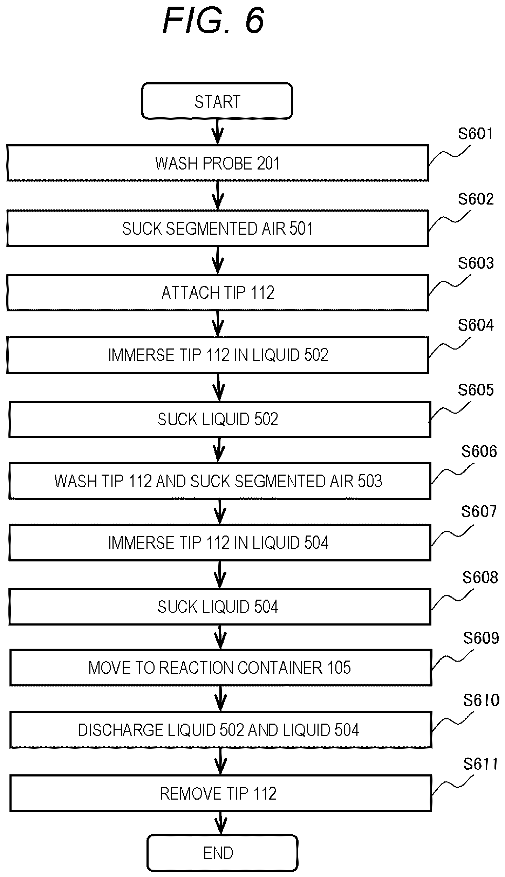

FIG. 6 is a flowchart illustrating an operation procedure of the pipetting mechanism for pipetting two types of liquids together. First, the washing water 204 is supplied into the probe 201 to wash the inside of the probe 201 (step S601). Then, the segmented air 501 is sucked into the probe 201 (step S602), and the tip 112 is attached to the leading end of the probe 201 (step S603).

Next, the pipetting mechanism 111 approaches the liquid 502 in the following procedure. The probe 201 is driven to dip the tip 112 into the liquid 502 (step S604), and the liquid 502 is sucked into the tip 112 (step S605). Then, the pipetting mechanism 111 approaches the washing mechanism 116 to wash the outer wall of the tip 112, and washing of the tip 112 and sucking of the segmented air 503 are performed (step S606).

Then, the pipetting mechanism 111 approaches the liquid 504 in the following procedure. The probe 201 is driven to dip the tip 112 into the liquid 504 (step S607), and the liquid 504 is sucked into the tip 112 (step S608).

Finally, the pipetting mechanism 111 approaches the incubator 106 and discharges the sucked liquids. That is, the probe 201 moves to the reaction container 105 (step S609), and the liquid 502 and the liquid 504 are discharged into the reaction container 105 (step S610). Then, the probe 201 moves to the tip discard port 115, and the tip 112 is removed (step S611). Immediately after discharging the liquid to the reaction container 105 in step S610, the pipetting mechanism 111 may cause the liquid in the reaction container 105 to be sucked into and discharged from the tip 112 to stir the liquid.

In the example illustrated in FIGS. 5 and 6, the liquids that are first and second in the suction order are respectively the liquid 502 and the liquid 504. The liquid 502 which is the first in the suction order reaches the upper part of the tip 112 in FIG. 5. The liquid 504 which is the second in the suction order reaches only the lower part of the tip 112.

In step S610 in FIG. 6 in which the liquid is discharged to the reaction container 105, a residual liquid resulting from a liquid film may remain in the tip 112. The residual liquid resulting from the liquid film is larger for a longer moving distance of the liquid in the tip 112. Thus, the liquid 502 that has reached the upper part of the tip 112 leaves a large amount of residual liquid. The liquid 504 that has reached only the lower part of the tip 112 leaves a small amount of residual liquid.

To accurately discharge each of the liquid 502 and the liquid 504 by the target pipetting amount thereof, it is necessary to suck the liquid 502 and the liquid 504 each by an amount larger by an assumed residual liquid amount, considering the residual liquid left in the tip 112 in the discharging process. Specifically, the control unit 207 sets in advance not only the target pipetting amount but also the extra amount to be sucked (extra suction amount). Then, in steps S605 and step S608 in FIG. 6, the control unit 207 causes the pipetting mechanism 111 to suck the liquids by the total amount of the target pipetting amounts and the extra suction amounts. The control unit 207 varies the extra suction amounts according to the suction order. Desirably, the extra suction amount of the liquid 502 sucked first is set large, and the extra suction amount of the liquid 504 sucked later is set small.

The thickness of the liquid film also depends on the physical properties of the liquid such as viscosity and surface tension. That is, since the residual liquid amount varies depending on the physical properties of the liquid, it is desirable to set the extra suction amount according to the physical properties of the liquid if known before suction.

### <Example of pipetting a single type of liquid>

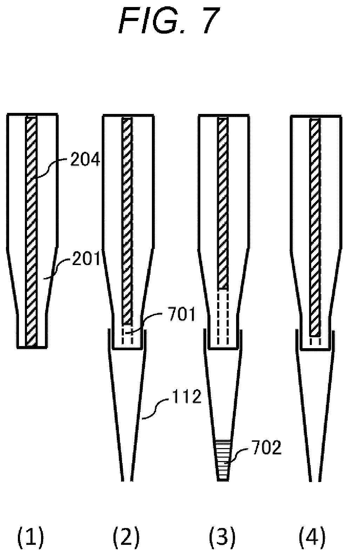

FIG. 7 is a diagram illustrating the internal state of the probe and the tip where a single type of liquid is pipetted to the reaction container. The inside of the probe 201 is initially filled with the washing water 204 (FIG. 7 (1)). The control unit 207 drives the syringe 203 to suck a segmented air 701 into the probe 201, and then causes the probe 201 to approach the tip buffer 113 to attach the tip 112 (FIG. 7 (2)).

Next, the control unit 207 drives the probe 201 to dip the tip 112 into a liquid 702. The liquid 704 is any one of the reagents 211a, 211b, and 211c and the specimen 212. During the dip, the control unit 207 drives the syringe 203 to suck the liquid 702 into the tip 112 (FIG. 7 (3)). Now the liquid to be pipetted has been sucked by the processes, the control unit 207 drives the probe 201 to approach the reaction container 105 and discharges the liquid (FIG. 7 (4)). As a result, the single liquid 702 is pipetted with the tip 112.

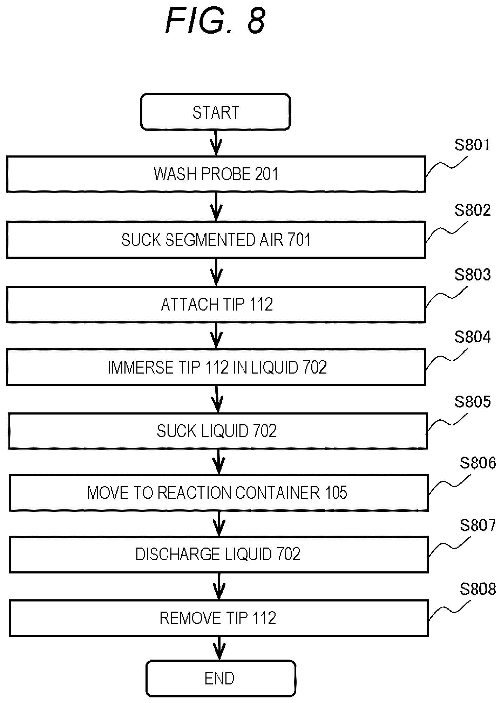

FIG. 8 is a flowchart illustrating an operation procedure of the pipetting mechanism for pipetting a single type of liquid. First, the washing water 204 is supplied into the probe 201 to wash the inside of the probe 201 (step S801). Then, the segmented air 701 is sucked into the probe 201 (step S802), and the tip 112 is attached to the leading end of the probe 201 (step S803).

Next, the pipetting mechanism 111 approaches the liquid 702 in the following procedure. The probe 201 is driven to dip the tip 112 into the liquid 702 (step S804), and the liquid 702 is sucked into the tip 112 (step S805).

Finally, the pipetting mechanism 111 approaches the incubator 106 and discharges the sucked liquids. That is, the probe 201 moves to the reaction container 105 (step S806), and the liquid 702 is discharged into the reaction container 105 (step S807). Then, the probe 201 moves to the tip discard port 115, and the tip 112 is removed (step S808).

Immediately after discharging the liquid to the reaction container 105 in step S807, the pipetting mechanism 111 may cause the liquid in the reaction container 105 to be sucked into and discharged from the tip 112 to stir the liquid.

In the pipetting in FIGS. 7 and 8, the suction target is only the liquid 702. In step S807 in FIG. 8 in which the liquid is discharged to the reaction container 105, a residual liquid resulting from a liquid film may remain in the tip 112. To accurately discharge the liquid 702 by the target pipetting amount, it is necessary to suck the liquid 702 by an amount larger by an assumed residual liquid amount, considering the residual liquid left in the tip 112 in the discharging process. Specifically, the control unit 207 sets in advance not only the target pipetting amount but also the extra amount to be sucked (extra suction amount). Then, in steps S805 in FIG. 8, the control unit 207 causes the pipetting mechanism 111 to suck the liquid by the total amount of the target pipetting amount and the extra suction amount.

The thickness of the liquid film also depends on the physical properties of the liquid such as viscosity and surface tension. That is, since the residual liquid amount varies depending on the physical properties of the liquid, it is desirable to set the extra suction amount according to the physical properties of the liquid if known before suction.

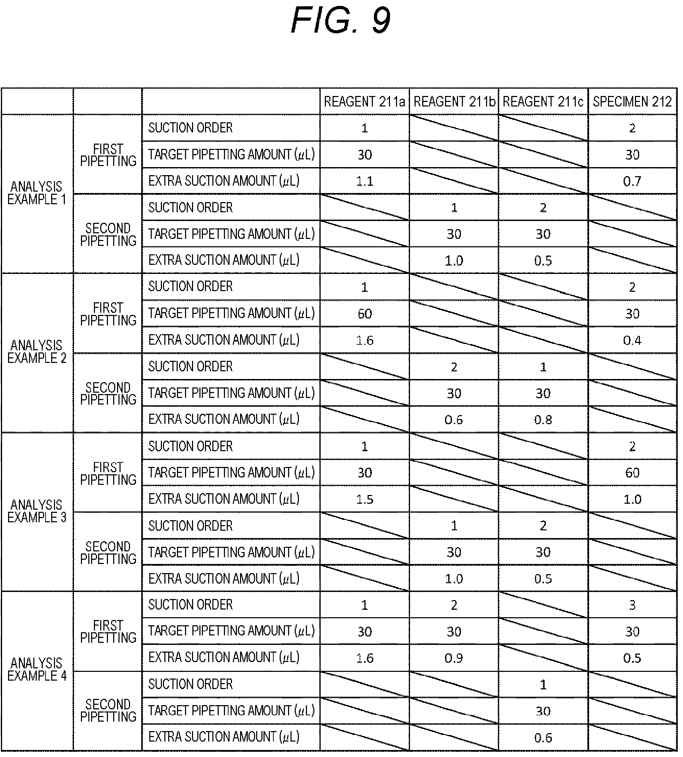

FIG. 9 is a table for setting a pipetting pattern for each analysis item in the first embodiment. Analysis Examples 1 to 4 that are set in FIG. 9 correspond to different analysis items, and the analysis patterns thereof are partially different. That is, the analysis examples have in common that the three types of reagents, which are the reagent 211a, the reagent 211b, the reagent 211c, and the specimen 212, are supplied to the common reaction container 105 by pipetting two times, but are different in any one of the number of types of liquids, the target pipetting amounts, and the suction order in each pipetting. The extra suction amount of each liquid is determined according to the suction order and the target pipetting amount.

### (Analysis Example 1)

First, the pipetting mechanism 111 pipettes the reagent 211a and the specimen 212 together in the first pipetting which is the pipetting performed first. Specifically, the probe 201 sucks the reagent 211a first (first in the suction order) and the specimen 212 later (second in the suction order), and discharges the liquids together to the reaction container 105. Then, the used tip 112 is discarded, and a new tip 112 is attached to the probe 201.

Next, in the second pipetting which is the pipetting performed second, the pipetting mechanism 111 pipettes the reagent 211b and the reagent 211c together. Specifically, the probe 201 sucks the reagent 211b first (first in the suction order) and the reagent 211c later (second in the suction order), and discharges the liquids together to the reaction container 105. Then, the used tip 112 is discarded, and the pipetting operation in Analysis Example 1 is finished.

As described above, in the first pipetting, the reagent 211a is the first in the suction order, and the specimen 212 is the second in the suction order. Thus, the reagent 211a corresponds to the liquid 502 in FIGS. 5 and 6, and the specimen 212 corresponds to the liquid 504 in FIGS. 5 and 6. So that, in the pipetting of the reagent 211a and the specimen 212, the reagent 211a leaves a larger residual liquid amount than the specimen 212. Accordingly, the extra suction amount of the reagent 211a is set to 1.1 µL, and 31.1 µL, which is the sum of 30 µL of the target pipetting amount and 1.1 µL, is sucked by the probe 201. For the specimen 212, the extra suction amount is set to 0.7 µL, and 30.7 µL, which is the sum of 30 µL of the target pipetting amount and 0.7 µL, is sucked by the probe 201.

As described above, in the second pipetting, the reagent 211b is the first in the suction order, and the reagent 211c is the second in the suction order. Thus, the reagent 211b corresponds to the liquid 502 in FIGS. 5 and 6, and the reagent 211c corresponds to the liquid 504 in FIGS. 5 and 6. So that, in the pipetting of the reagent 211b and the reagent 211c, the reagent 211b leaves a larger residual liquid amount than the reagent 211c. Accordingly, the extra suction amount of the reagent 211b is set to 1.0 µL, and 31.0 µL, which is the sum of 30 µL of the target pipetting amount and 1.0 µL, is sucked by the probe 201. For the reagent 211c, the extra suction amount is set to 0.5 µL, and 30.5 µL, which is the sum of 30 µL of the target pipetting amount and 0.5 µL, is sucked by the probe 201.

The extra suction amounts of the reagent 211a and the specimen 212 in the first pipetting are set larger, respectively, than the extra suction amounts of the reagent 211b and the reagent 211c in the second pipetting. This is because, when the reagent 211a and the specimen 212 are discharged to the reaction container 105 in the first pipetting and then the reagent 211b and the reagent 211c are discharged to the same reaction container 105 in the second pipetting, the components of the reagent 211a and the specimen 212 (already discharged to the reaction container 105) adhere to the tip 112. Considering the removal of the adhering components of the reagent 211a and the specimen 212, different extra suction amounts are set for the first pipetting and the second pipetting.

### (Analysis Example 2)

First, the pipetting mechanism 111 pipettes the reagent 211a and the specimen 212 together in the first pipetting which is the pipetting performed first. Specifically, the probe 201 sucks the reagent 211a first (first in the suction order) and the specimen 212 later (second in the suction order), and discharges the liquids together to the reaction container 105. Then, the used tip 112 is discarded, and a new tip 112 is attached to the probe 201.

Next, in the second pipetting which is the pipetting performed second, the pipetting mechanism 111 pipettes the reagent 211b and the reagent 211c together. Specifically, the probe 201 sucks the reagent 211c first (first in the suction order) and the reagent 211b later (second in the suction order), and discharges the liquids together to the reaction container 105. Then, the used tip 112 is discarded, and the pipetting operation in Analysis Example 2 is finished.

As described above, in the first pipetting, the reagent 211a is the first in the suction order, and the specimen 212 is the second in the suction order. Thus, the reagent 211a corresponds to the liquid 502 in FIGS. 5 and 6, and the specimen 212 corresponds to the liquid 504 in FIGS. 5 and 6. So that, in the pipetting of the reagent 211a and the specimen 212, the reagent 211a leaves a larger residual liquid amount than the specimen 212. Accordingly, the extra suction amount of the reagent 211a is set to 1.6 µL, and 61.6 µL, which is the sum of 60 µL of the target pipetting amount and 1.6 µL, is sucked by the probe 201. For the specimen 212, the extra suction amount is set to 0.4 µL, and 30.4 µL, which is the sum of 30 µL of the target pipetting amount and 0.4 µL, is sucked by the probe 201.

As described above, in the second pipetting, the reagent 211c is the first in the suction order, and the reagent 211b is the second in the suction order. Thus, the reagent 211c corresponds to the liquid 502 in FIGS. 5 and 6, and the reagent 211b corresponds to the liquid 504 in FIGS. 5 and 6. So that, in the pipetting of the reagent 211b and the reagent 211c, the reagent 211c leaves a larger residual liquid amount than the reagent 211b. Accordingly, the extra suction amount of the reagent 211b is set to 0.6 µL, and 30.6 µL, which is the sum of 30 µL of the target pipetting amount and 0.6 µL, is sucked by the probe 201. For the reagent 211c, the extra suction amount is set to 0.8 µL, and 30.8 µL, which is the sum of 30 µL of the target pipetting amount and 0.8 µL, is sucked by the probe 201.

In the first pipetting in Analysis Example 2, the suction order of the reagent 211a and the specimen 212 is the same as the suction order in the first pipetting in Analysis Example 1. However, the target pipetting amount of the reagent 211a is 30 µL in Analysis Example 1, and 60 µL in Analysis Example 2. As the target pipetting amount increases, the liquid reaches a further upper part of the tip 112 in FIG. 5, and thus the residual liquid amount also increases. Thus, the extra suction amount of the reagent 211a in the first pipetting in Analysis Example 2 is set larger than the extra suction amount of the reagent 211a in the first pipetting in Analysis Example 1. Meanwhile, since the pipetting amount of the reagent 211a in the first pipetting in Analysis Example 2 is larger than that in Analysis Example 1, the specimen 212 is washed off by the discharged reagent 211a and is not likely to be left in the tip 112. Thus, the extra suction amount of the specimen 212 in the first pipetting in Analysis Example 2 is set smaller than the extra suction amount of the specimen 212 in the first pipetting in Analysis Example 1.

Further, in the second pipetting in Analysis Example 2, the suction order of the reagent 211b and the reagent 211c is opposite to that in the second pipetting in Analysis Example 1. Thus, as compared with Analysis Example 1, the residual liquid amount of the reagent 211b in the second pipetting in Analysis Example 2 is small, and the residual liquid amount of the reagent 211c is large. Therefore, the extra suction amount of the reagent 211b in the second pipetting in Analysis Example 2 is set smaller than the extra suction amount of the reagent 211b in Analysis Example 1, and the extra suction amount of the reagent 211c in the second pipetting in Analysis Example 2 is set larger than the extra suction amount of the reagent 211c in Analysis Example 1.

As described above, from comparison between Analysis Example 2 and Analysis Example 1, there are some differences in the suction order of the liquids that are pipetted together and the target pipetting amount of the liquid, and therefore in the extra suction amount.

### (Analysis Example 3)

First, the pipetting mechanism 111 pipettes the reagent 211a and the specimen 212 together in the first pipetting which is the pipetting performed first. Specifically, the probe 201 sucks the reagent 211a first (first in the suction order) and the specimen 212 later (second in the suction order), and discharges the liquids together to the reaction container 105. Then, the used tip 112 is discarded, and a new tip 112 is attached to the probe 201.

Next, in the second pipetting which is the pipetting performed second, the pipetting mechanism 111 pipettes the reagent 211b and the reagent 211c together. Specifically, the probe 201 sucks the reagent 211b first (first in the suction order) and the reagent 211c later (second in the suction order), and discharges the liquids together to the reaction container 105. Then, the used tip 112 is discarded, and the pipetting operation in Analysis Example 3 is finished.

As described above, in the first pipetting, the reagent 211a is the first in the suction order, and the specimen 212 is the second in the suction order. Thus, the reagent 211a corresponds to the liquid 502 in FIGS. 5 and 6, and the specimen 212 corresponds to the liquid 504 in FIGS. 5 and 6. So that, in the pipetting of the reagent 211a and the specimen 212, the reagent 211a leaves a larger residual liquid amount than the specimen 212. Accordingly, the extra suction amount of the reagent 211a is set to 1.5 µL, and 31.5 µL, which is the sum of 30 µL of the target pipetting amount and 1.5 µL, is sucked by the probe 201. For the specimen 212, the extra suction amount is set to 1.0 µL, and 61.0 µL, which is the sum of 60 µL of the target pipetting amount and 1.0 µL, is sucked by the probe 201.

As described above, in the second pipetting, the reagent 211b is the first in the suction order, and the reagent 211c is the second in the suction order. Thus, the reagent 211b corresponds to the liquid 502 in FIGS. 5 and 6, and the reagent 211c corresponds to the liquid 504 in FIGS. 5 and 6. So that, in the pipetting of the reagent 211b and the reagent 211c, the reagent 211b leaves a larger residual liquid amount than the reagent 211c. Accordingly, the extra suction amount of the reagent 211b is set to 1.0 µL, and 31.0 µL, which is the sum of 30 µL of the target pipetting amount and 1.0 µL, is sucked by the probe 201. For the reagent 211c, the extra suction amount is set to 0.5 µL, and 30.5 µL, which is the sum of 30 µL of the target pipetting amount and 0.5 µL, is sucked by the probe 201.

In the first pipetting in Analysis Example 3, the target pipetting amount of the specimen 212 is larger than that in Analysis Example 1, and it is likely that more residual liquid will be left. Therefore, the extra pipetting amount of the specimen 212 in Analysis Example 3 is set larger than the extra pipetting amount of the specimen 212 in Analysis Example 1. Furthermore, since the target pipetting amount of the specimen 212 is larger than that in Analysis Example 1, the reagent 211a which is the first in the suction order reaches a further upper part of the tip 112 than in Analysis Example 1, which results in a larger residual liquid amount. Thus, the extra suction amount of the reagent 211a in Analysis Example 3 is set larger than the extra suction amount of the reagent 211a in Analysis Example 1.

As described above, from comparison between Analysis Example 3 and Analysis Example 1, there are some differences in the target pipetting amounts of the liquids that are pipetted together, in particular in the first pipetting, and therefore in the extra suction amount. In the second pipetting, the suction order and the target pipetting amounts of the liquids that are pipetted together are the same among Analysis Example 1 and Analysis Example 3, so that the extra suction amounts are also the same among the analysis examples.

### (Analysis Example 4)

First, the pipetting mechanism 111 pipettes the reagent 211a, the reagent 211b, and the specimen 212 together in the first pipetting that is the pipetting performed first. Specifically, the probe 201 sucks the reagent 211a first (first in the suction order), the reagent 211b next (second in the suction order), and the specimen 212 last (third in the suction order), and discharges the liquids together to the reaction container 105. Then, the used tip 112 is discarded, and a new tip 112 is attached to the probe 201.

Next, in the second pipetting that is the pipetting performed second, the pipetting mechanism 111 pipettes only the reagent 211c. Specifically, the probe 201 sucks only the reagent 211c (first in the suction order), and discharges the reagent 211c to the reaction container 105. Then, the used tip 112 is discarded, and the pipetting operation in Analysis Example 4 is finished.

As described above, in the first pipetting, the reagent 211a is the first in the suction order, the reagent 211b is the second in the suction order, and the specimen 212 is the third in the suction order. Thus, the reagent 211a corresponds to the liquid 302 in FIGS. 3 and 4, the reagent 211b corresponds to the liquid 304 in FIGS. 3 and 4, and the specimen 212 corresponds to the liquid 306 in FIGS. 3 and 4. So that, in the pipetting of the reagent 211a, the reagent 211b, and the specimen 212, the residual liquid amounts of the reagent 211a, the reagent 211b, and the specimen 212 are larger in this order. Accordingly, the extra suction amount of the reagent 211a is set to 1.6 µL, and 31.6 µL, which is the sum of 30 µL of the target pipetting amount and 1.6 µL, is sucked by the probe 201. Next, the extra suction amount of the reagent 211b is set to 0.9 µL, and 30.9 µL, which is the sum of 30 µL of the target pipetting amount and 0.9 µL, is sucked by the probe 201. For the specimen 212, the extra suction amount is set to 0.5 µL, and 30.5 µL, which is the sum of 30 µL of the target pipetting amount and 0.5 µL, is sucked by the probe 201.

As described above, only the reagent 211c is pipetted in the second pipetting. Thus, the reagent 211c corresponds to the liquid 702 in FIGS. 7 and 8. For the reagent 211c, the extra suction amount is set to 0.6 µL, and 30.6 µL, which is the sum of 30 µL of the target pipetting amount and 0.6 µL, is sucked by the probe 201.

In the first pipetting in Analysis Example 4, three types of liquids are continuously sucked, so that the reagent 211a which is the first in the suction order reaches a further upper part of the tip 112 than in Analysis Example 1 in which two types of liquids are continuously sucked, and thus the residual liquid amount is further larger. Thus, the extra suction amount of the reagent 211a in Analysis Example 4 is set larger than that in Analysis Example 1 even when the suction order and the target pipetting amounts are the same as those in Analysis Example 1. Similarly, in the second pipetting in Analysis Example 4, only the reagent 211c is sucked, so that the residual liquid amount of the reagent 211c is smaller than that in Analysis Example 2 in which two types of liquids are continuously sucked. Thus, the extra suction amount of the reagent 211c in Analysis Example 4 is set smaller than that in Analysis Example 2 even when the suction order and the target liquid amount are the same as those in Analysis Example 2. Meanwhile, in comparison between the reagent 211c in Analysis Example 4 and the reagent 211c in Analysis Example 1, the reagent 211c in Analysis Example 1 is washed off by the discharged reagent 211b but the reagent 211c in Analysis Example 4 is not washed off. Therefore, the extra suction amount of the reagent 211c in Analysis Example 4 is set larger than the extra suction amount of the reagent 211c in Analysis Example 1.

As described above, from comparison of Analysis Example 4 with other analysis examples, the number of types of liquids that are pipetted together differs and thus the extra suction amount differs.

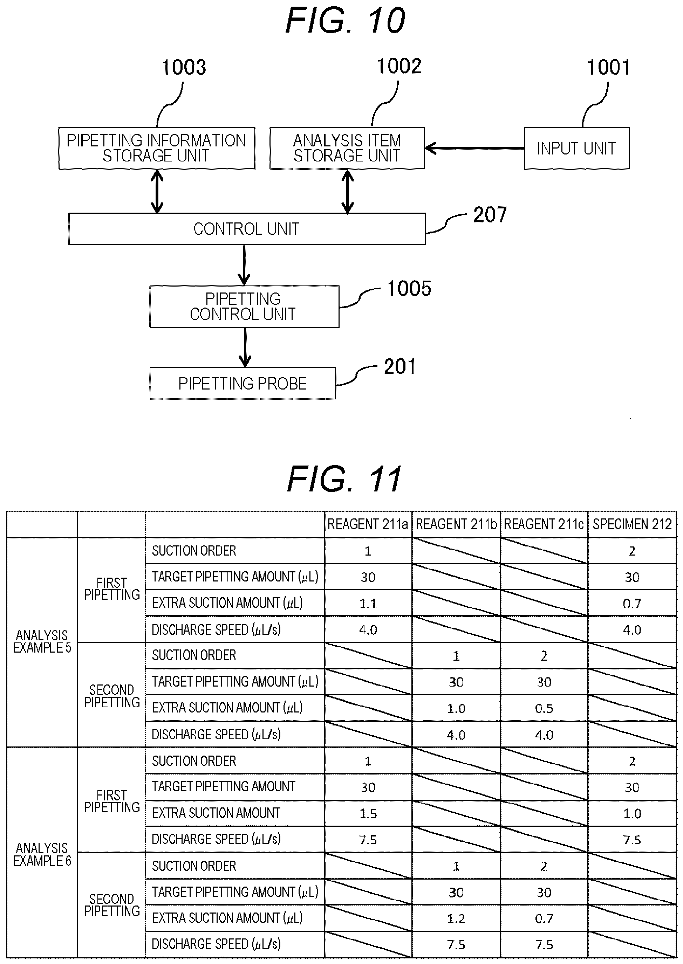

FIG. 10 is a block diagram illustrating an information flow in which the control unit controls the pipetting mechanism for an analysis item. The analysis item is input from an input unit 1001 and stored in an analysis item storage unit 1002. After the start of analysis, the control unit 207 sets the types of liquids to be pipetted together, the target pipetting amount of each liquid, the suction order, and the like based on the pipetting information stored in advance in a pipetting information storage unit 1003. Subsequently, the control unit 207 determines the extra suction amount of each liquid and calculates the total suction amount which is the sum of the target pipetting amount and the extra suction amount for each liquid. Furthermore, the control unit 207 controls a sucking operation performed by the probe 201 via a pipetting control unit 1005 (such as the syringe driving unit 205 in FIG. 2) based on the calculated total suction amount.

Priority (urgency) information may also be input from the input unit 1001 in addition to the analysis item. In this case, the control unit 207 determines, for different priorities, pipetting patterns that are different in, for example, the number of types of liquids to be pipetted together even for the same analysis item. For example, Analysis Example 1 is adopted for a normal specimen, and the second pipetting is performed after a predetermined time has elapsed after reacting the reagent 211a with the specimen 212 in the first pipetting. For an urgent specimen, Analysis Example 4 is adopted, and the second pipetting is performed immediately after pipetting the reagent 211a, the reagent 211b, and the specimen 212 by the first pipetting. As described above, even for the same analysis item, the combination of liquids to be pipetted together and the suction order may differ depending on whether the specimen is an urgent specimen, and therefore the extra suction amount may differ.

According to the present embodiment, the extra suction amounts are set according to the number of types of liquids to be pipetted together and the suction order, and the liquids can be supplied to the reaction container by the target pipetting amounts with high accuracy. Thus, the number of times washing is performed and the necessary time for pipetting can be reduced, and also highly reliable analysis can be performed for a number of analysis items.

### (Second embodiment)

A second embodiment will be described with reference to FIG. 11. FIG. 11 is a table for setting a pipetting pattern for each analysis item in the second embodiment. In the second embodiment, the extra suction amount is varied according to the discharge speed of a liquid. Hereinafter, only differences from the first embodiment will be described.

The discharge speed (of liquid) in step S413, step S611, and step S807 described in the first embodiment can be set different depending on the analysis item. For example, as shown in FIG. 11, the analysis item corresponding to Analysis Example 6 has a higher discharge speed than the analysis item corresponding to Analysis Example 5, and thus has higher processing efficiency.

For a higher discharge speed of the liquid, the liquid film becomes thicker and a larger amount of residual liquid remains. Therefore, in Analysis Example 6, the extra suction amounts of all the liquids are set, respectively, larger than those in Analysis Example 5. Note that the information related to the discharge speed for each analysis item is stored in the pipetting information storage unit 1003 in FIG. 10, and based on this information, the control unit 207 determines the extra suction amount of each liquid.

According to the present embodiment, the liquid can be supplied to the reaction container by the target pipetting amount with higher accuracy, which further improves the analysis accuracy.

### (Third embodiment)

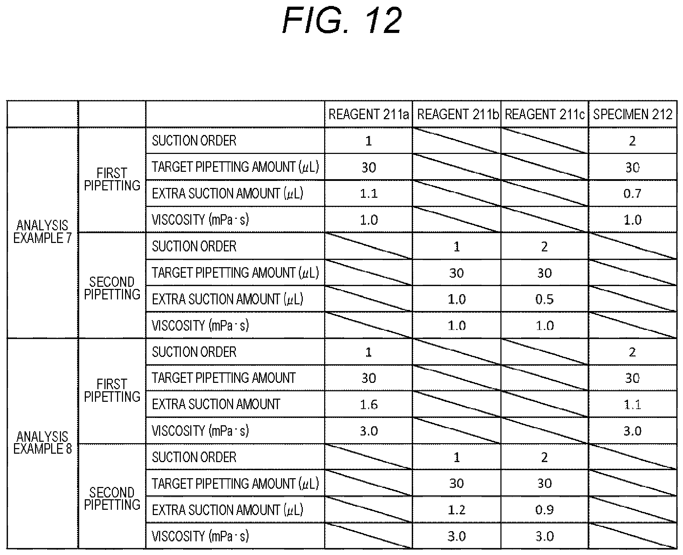

A third embodiment will be described with reference to FIG. 12. FIG. 12 is a table for setting a pipetting pattern for each analysis item in the third embodiment. In the third embodiment, the extra suction amounts are varied according to the viscosity of liquids. Hereinafter, only differences from the first embodiment will be described.

The viscosity of the pipetted liquid varies depending on the analysis item. For example, as shown in FIG. 12, the analysis item corresponding to Analysis Example 8 has higher viscosity than the analysis item corresponding to Analysis Example 7.

For higher viscosity of the liquid, the liquid film becomes thicker and a larger amount of residual liquid remains. Therefore, in Analysis Example 8, the extra suction amounts of all the liquids are set larger than those in Analysis Example 7, respectively. Note that the information related to the viscosity for each analysis item is stored in the pipetting information storage unit 1003 in FIG. 10, and based on this information, the control unit 207 determines the extra suction amount of each liquid.

According to the present embodiment, the liquid can be supplied to the reaction container by the target pipetting amount with higher accuracy, which further improves the analysis accuracy.

The present invention is not limited to the embodiments described above, and includes various modifications. For example, in the embodiments described above, the pipetting mechanism 111 that pipettes using the tip 112 has been described, but the same concept as that of the embodiments described above can be applied even to a pipetting mechanism in which a liquid is directly sucked into the probe 201 without using the tip. In addition, the embodiments have been described above that one to three types of liquids are pipetted at a time, but four or more types of liquids may be pipetted at a time. Furthermore, the embodiments described above have been described that pipetting is performed two times (the first pipetting and the second pipetting) for the common reaction container, but pipetting may be performed one time or three or more times for the common reaction container.

Furthermore, in the second embodiment and the third embodiment, the extra suction amount is varied according to the discharge speed or viscosity of the liquid, but the extra suction amount may be varied according to other physical properties of the liquid. For example, for a liquid having higher surface tension, the liquid film becomes thinner and the residual liquid amount becomes smaller. Thus, when the liquid has high surface tension, the extra suction amount may be reduced as compared with the case where the liquid has small surface tension. Furthermore, for the liquid having higher density, the liquid film becomes thicker and a larger amount of residual liquid remains. Thus, when the liquid has high density, the extra suction amount may be increased as compared with the case where the liquid has small density.

### Reference Signs List

- 1: automated analysis device
- 101: reagent bottle
- 102: reagent disk
- 103: specimen container
- 104: specimen disk
- 105: reaction container
- 106: incubator
- 107: reaction container tray
- 108: gripper
- 109: detection unit
- 110: reaction container discard port
- 111: pipetting mechanism
- 112: tip
- 113: tip buffer
- 114: tip tray
- 115: tip discard port
- 116: washing mechanism
- 116a: washing nozzle
- 116b: drain cup
- 201: probe
- 202: tube
- 203: syringe
- 203a: cylinder
- 203b: plunger
- 204: washing water
- 205: syringe driving unit
- 206: probe driving unit
- 207: control unit
- 208: washing water tank
- 209: pump
- 210: electromagnetic valve
- 211a: reagent
- 211b: reagent
- 212: specimen
- 213: electromagnetic valve
- 301: segmented air
- 302: liquid
- 303: segmented air
- 304: liquid
- 305: segmented air
- 306: liquid
- 501: segmented air
- 502: liquid
- 503: segmented air
- 504: liquid
- 701: segmented air
- 702: liquid
- 1001: input unit
- 1002: analysis item storage unit
- 1003: pipetting information storage unit
- 1005: pipetting control unit

## Claims

1. An automated analysis device (1) comprising:
a pipetting mechanism (111) that sucks a liquid from a specimen container (103) or a reagent container (101) and discharges the liquid to a reaction container (105); and
a control unit (207) that controls an operation of the pipetting mechanism (111) to pipette a target pipetting amount of the liquid, wherein
in pipetting, the pipetting mechanism (111) sucks an extra suction amount of the liquid in addition to the target pipetting amount of the liquid, and
wherein the pipetting mechanism (111)continuously sucks a
plurality of types of liquids and continuously discharge the plurality of types of liquids that have been sucked,
**characterized in that** the control unit (207) varies an extra suction amount to be sucked by the pipetting mechanism (111) according to an order of sucking liquids.

2. The automated analysis device (1) according to claim 1, wherein
a number of types of liquids sucked by the pipetting mechanism (111) differs depending on an analysis item.

3. The automated analysis device (1) according to claim 1, wherein
the order of sucking liquids by the pipetting mechanism (111) differs depending on an analysis item.

4. The automated analysis device (1) according to claim 1, wherein
the control unit (207) controls the pipetting mechanism (111) to suck a larger extra suction amount of a liquid that is sucked first than an extra suction amount of a liquid that is sucked later.

5. The automated analysis device (1) according to claim 4, wherein
when a target pipetting amount of a liquid is large, the control unit (207) controls the pipetting mechanism (111) to suck a larger extra suction amount of a liquid than when a target pipetting amount of a liquid is small.

6. The automated analysis device (1) according to claim 4, wherein
when the pipetting mechanism (111) is to perform two times or more pipetting for a common reaction container (105),
the control unit (207) controls the pipetting mechanism (111) to suck a larger extra suction amount of a liquid that is pipetted first than an extra suction amount of a liquid that is pipetted second.

7. The automated analysis device (1) according to claim 4, wherein
when the pipetting mechanism (111) is to perform two times or more pipetting for a common reaction container (105),
a number of types of liquids to be pipetted first differs for different priorities even for a same analysis item.

8. The automated analysis device (1) according to claim 1, wherein
when a suction speed of a liquid is large, the control unit (207) controls the pipetting mechanism (111) to suck a larger extra suction amount of a liquid than when a suction speed of a liquid is small.

9. The automated analysis device (1) according to claim 1, wherein
when viscosity of a liquid is large, the control unit (207) controls the pipetting mechanism (111) to suck a larger extra suction amount of a liquid than when viscosity of a liquid is small.

10. The automated analysis device (1) according to claim 1, wherein
when surface tension of a liquid is large, the control unit (207) controls the pipetting mechanism (111) to suck a smaller extra suction amount of a liquid than when surface tension of the liquid is small.

## Patentansprüche

1. Automatisierte Analysevorrichtung (1), umfassend:
einen Pipettiermechanismus (111), der eine Flüssigkeit von einem Probenbehälter (103) oder einem Reagenzienbehälter (101) ansaugt und die Flüssigkeit an einen Reaktionsbehälter (105) abgibt; und
eine Steuereinheit (207), die eine Betätigung des Pipettiermechanismus (111) steuert, um eine Zielpipettiermenge der Flüssigkeit zu pipettieren, wobei
der Pipettiermechanismus (111) beim Pipettieren eine zusätzliche Ansaugmenge der Flüssigkeit zusätzlich zu der Zielpipettiermenge der Flüssigkeit ansaugt und
wobei der Pipettiermechanismus (111) kontinuierlich eine Vielzahl von Flüssigkeitstypen ansaugt und die Vielzahl von Flüssigkeitstypen, die angesaugt wurden, kontinuierlich abgibt,
**dadurch gekennzeichnet, dass** die Steuereinheit (207) eine zusätzliche Ansaugmenge, die durch den Pipettiermechanismus (111) anzusaugen ist, entsprechend einer Reihenfolge des Ansaugens von Flüssigkeiten variiert.

2. Automatisierte Analysevorrichtung (1) nach Anspruch 1, wobei
eine Anzahl von Flüssigkeitstypen, die durch den Pipettiermechanismus (111) angesaugt werden, abhängig von einer Analysezeit unterschiedlich ist.

3. Automatisierte Analysevorrichtung (1) nach Anspruch 1, wobei
die Reihenfolge des Ansaugens von Flüssigkeiten durch den Pipettiermechanismus (111) abhängig von einem Analysegegenstand unterschiedlich ist.

4. Automatisierte Analysevorrichtung (1) nach Anspruch 1, wobei
die Steuereinheit (207) den Pipettiermechanismus (111) steuert, um eine größere zusätzliche Ansaugmenge einer Flüssigkeit anzusaugen, die vor einer zusätzlichen Ansaugmenge einer später angesaugten Flüssigkeit angesaugt wird.

5. Automatisierte Analysevorrichtung (1) nach Anspruch 4,
wenn eine Zielpipettiermenge einer Flüssigkeit groß ist, die Steuereinheit (207) den Pipettiermechanismus (111) steuert, um eine größere zusätzliche Ansaugmenge einer Flüssigkeit anzusaugen als wenn eine Zielpipettiermenge einer Flüssigkeit gering ist.

6. Automatisierte Analysevorrichtung (1) nach Anspruch 4, wobei,
wenn der Pipettiermechanismus (111) das Pipettieren zweimal oder mehr für einen gemeinsamen Reaktionsbehälter (105) durchführen soll,
die Steuereinheit (207) den Pipettiermechanismus (111) steuert, um eine größere zusätzliche Ansaugmenge einer Flüssigkeit anzusagen, die als erste in Bezug auf eine zusätzliche Ansaugmenge einer als zweite pipettierten Flüssigkeit pipettiert wird.

7. Automatisierte Analysevorrichtung (1) nach Anspruch 4, wobei
wenn der Pipettiermechanismus (111) das Pipettieren zweimal oder mehr für einen gemeinsamen Reaktionsbehälter (105) durchführen soll,
eine Anzahl von Flüssigkeitstypen, die als erste zu pipettieren sind, für verschiedene Prioritäten selbst für eine selbe Analyse unterschiedlich ist.

8. Automatisierte Analysevorrichtung (1) nach Anspruch 1, wobei
wenn eine Ansauggeschwindigkeit einer Flüssigkeit groß ist, die Steuereinheit (207) den Pipettiermechanismus (111) steuert, um eine größere zusätzliche Ansaugmenge einer Flüssigkeit anzusaugen als wenn eine Ansauggeschwindigkeit einer Flüssigkeit gering ist.

9. Automatisierte Analysevorrichtung (1) nach Anspruch 1, wobei
wenn die Viskosität einer Flüssigkeit hoch ist, die Steuereinheit (207) den Pipettiermechanismus (111) steuert, um eine größere zusätzliche Ansaugmenge einer Flüssigkeit anzusaugen als wenn die Viskosität einer Flüssigkeit gering ist.

10. Automatisierte Analysevorrichtung (1) nach Anspruch 1, wobei
wenn die Oberflächenspannung einer Flüssigkeit groß ist, die Steuereinheit (207) den Pipettiermechanismus (111) steuert, um eine geringere zusätzliche Ansaugmenge einer Flüssigkeit anzusagen als wenn die Oberflächenspannung der Flüssigkeit gering ist.

## Revendications

1. Dispositif d'analyse automatisé (1), comprenant :
un mécanisme de pipetage (111) qui aspire un liquide à partir d'un récipient d'échantillon (103) ou d'un récipient de réactif (101) et évacue le liquide vers un récipient de réaction (105) ; et
une unité de commande (207) qui commande une opération du mécanisme de pipetage (111) pour pipeter une quantité de pipetage cible du liquide, dans lequel
lors du pipetage, le mécanisme de pipetage (111) aspire une quantité d'aspiration supplémentaire du liquide en plus de la quantité de pipetage cible du liquide, et
dans lequel le mécanisme de pipetage (111) aspire en continu une pluralité de types de liquides et décharge en continu la pluralité de types de liquides qui ont été aspirés,
**caractérisé en ce que** l'unité de commande (207) fait varier une quantité d'aspiration supplémentaire à aspirer par le mécanisme de pipetage (111) selon un ordre de liquides d'aspiration.

2. Dispositif d'analyse automatisé (1) selon la revendication 1, dans lequel
un certain nombre de types de liquides aspirés par le mécanisme de pipetage (111) diffèrent en fonction d'un élément d'analyse.

3. Dispositif d'analyse automatisé (1) selon la revendication 1, dans lequel
l'ordre d'aspiration des liquides par le mécanisme de pipetage (111) diffère en fonction d'un élément d'analyse.

4. Dispositif d'analyse automatisé (1) selon la revendication 1, dans lequel
l'unité de commande (207) commande le mécanisme de pipetage (111) pour aspirer une quantité d'aspiration supplémentaire plus importante pour un liquide qui est aspiré en premier que pour un liquide aspiré ultérieurement.

5. Dispositif d'analyse automatisé (1) selon la revendication 4, dans lequel
lorsqu'une quantité de pipetage cible d'un liquide est importante, l'unité de commande (207) commande le mécanisme de pipetage (111) pour aspirer une quantité d'aspiration supplémentaire du liquide plus importante que lorsqu'une quantité de pipetage cible d'un liquide est faible.

6. Dispositif d'analyse automatisé (1) selon la revendication 4, dans lequel
lorsque le mécanisme de pipetage (111) doit effectuer un pipetage deux fois ou plus pour un récipient de réaction commun (105),
l'unité de commande (207) commande le mécanisme de pipetage (111) pour aspirer une quantité d'aspiration supplémentaire plus importante pour un liquide qui est pipeté en premier que pour un liquide qui est pipeté en second.

7. Dispositif d'analyse automatisé (1) selon la revendication 4, dans lequel
lorsque le mécanisme de pipetage (111) doit effectuer un pipetage deux fois ou plus pour un récipient de réaction commun (105), un nombre de types de liquides à pipeter en premier diffèrent selon des priorités différentes même pour un même élément d'analyse.

8. Dispositif d'analyse automatisé (1) selon la revendication 1, dans lequel
lorsqu'une vitesse d'aspiration d'un liquide est importante, l'unité de commande (207) commande le mécanisme de pipetage (111) pour aspirer une quantité d'aspiration supplémentaire plus importante d'un liquide que lorsqu'une vitesse d'aspiration d'un liquide est faible.

9. Dispositif d'analyse automatisé (1) selon la revendication 1, dans lequel
lorsque la viscosité d'un liquide est importante, l'unité de commande (207) commande le mécanisme de pipetage (111) pour aspirer une quantité d'aspiration supplémentaire plus importante d'un liquide que lorsque la viscosité d'un liquide est faible.

10. Dispositif d'analyse automatisé (1) selon la revendication 1, dans lequel
lorsque la tension superficielle d'un liquide est importante, l'unité de commande (207) commande le mécanisme de pipetage (111) pour aspirer une quantité d'aspiration supplémentaire d'un liquide plus faible que lorsque la tension superficielle du liquide est faible.
